Europäisches Patentamt

European Patent Office

Office européen des brevets

(11) Publication number: **0 015 778**
**B1**

(12) **EUROPEAN PATENT SPECIFICATION**

(45) Date of publication of patent specification: **04.05.83**

(51) Int. Cl.³: **B 64 D 17/62**

(21) Application number: **80300761.6**

(22) Date of filing: **12.03.80**

(54) Parachute with inflation assistance device.

(30) Priority: **12.03.79 US 19627**

(43) Date of publication of application:
**17.09.80 Bulletin 80/19**

(45) Publication of the grant of the patent:
**04.05.83 Bulletin 83/18**

(84) Designated Contracting States:
**AT BE CH DE FR GB IT NL SE**

(56) References cited:
**FR - A - 1 015 499**
**FR - A - 1 092 383**
**FR - A - 1 295 993**
**FR - A - 1 416 429**
**US - A - 1 864 298**
**US - A - 1 872 705**
**US - A - 2 283 479**
**US - A - 2 974 913**
**US - A - 3 420 478**

(73) Proprietor: **Koenig, Garland Christian**
**1845 Tara Drive**
**Prattville Alabama 36067 (US)**

(72) Inventor: **Koenig, Garland Christian**
**1845 Tara Drive**
**Prattville Alabama 36067 (US)**

(74) Representative: **Barlow, Roy James et al,**
**J.A.KEMP & CO. 14, South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Parachute with inflation assistance device

The object of this invention is the provision of a parachute having a non-mechanical, non-pyrotechnic device to ensure the full, rapid and uniform inflation of a parachute canopy deployed at altitudes above ground level which are in the 60 to 90 metre range.

U.S. Patent No. 3,420,478 discloses a cargo dropping chute having additional gores which span the seams between adjacent canopy gores to define additional air-confining chambers.

U.S. Patent No. 2,974,913 discloses a drogue or pilot chute having a circular canopy of gore construction with adjacent canopy gores joined by radial seams extending from the skirt of the canopy to the apex, and external additional gores of porous material covering the canopy gores and each having radial edges joined to the main canopy along the adjacent radial seams between canopy gores at the sides of the respective canopy gore which it covers. The width of said external additional gore is greater than that of said respective canopy gore to define therebetween a compartment extending generally radially of the canopy with the end of said compartment nearer the apex of the canopy closed and the other end of said compartment open. That end of each said external additional gore which is nearer to the skirt terminates at a location spaced from the skirt of said circular canopy.

The parachute of this invention is characterised in that the number of external additional gores is less than that of the canopy gores.

The parachute inflation assistance device, when applied to flat, circular canopies, or conical or hemispherical canopies of gore construction, should rapidly open the canopy, initially at the skirt, thereby compelling the canopy to fill from the skirt upwards to the apex in a rapid filling sequence. The partially entrapped column of air, in the compartment defined between an external gore and the canopy gore which it covers, increases the buoyancy of the canopy since the upper end of this compartment is closed and the lower end is open. An anti-oscillation vent or slot may be provided in the device to effectively eliminate oscillation common to conventional circular canopy designs. For example, excellent canopy balance may be achieved by the construction of external gore coverings on every fourth gore on a 28 gore canopy, and every sixth gore on a 30 gore canopy, beginning with either gore number 1 or the highest numbered gore.

In order that the present invention may more readily be understood the following description is given, merely by way of example, with reference to the accompanying drawings, in which:—

Figure 1 shows a "just deployed" conventional canopy;

Figure 2 shows a canopy in accordance with the present invention in the same "just deployed" state;

Figure 3 shows schematically the folded skirt of a conventional parachute in the packed state;

Figure 4 shows the action of two inflation assisting devices on gores 14 and 28;

Figure 5 shows the action of a further two inflation assistance devices on gores 7 and 21;

Figure 6 shows a side elevational view of a conventional gore;

Figure 7 is a side elevational view of the parachute inflation assistance device used to cover the gore of Figure 6;

Figure 8 shows an elevational view of the inflation assistance device on an inflated canopy;

Figure 9 shows the air flow access opening of the inflation assistance device at the canopy skirt; and

Figure 10 illustrates the location of the anti-oscillation vent slot of the inflation assistance device.

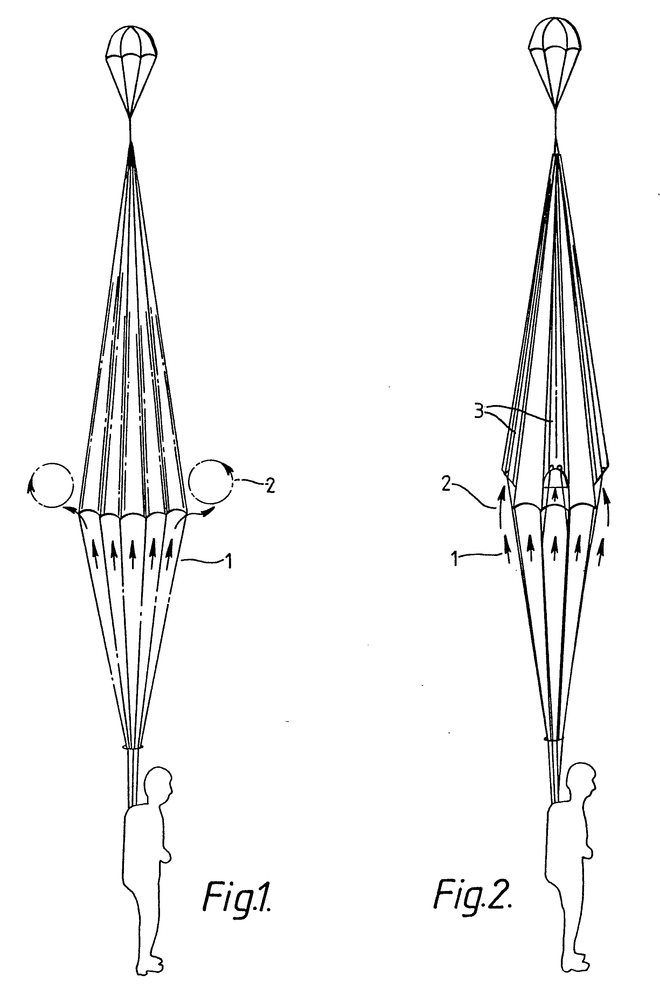

Figure 1 illustrates a conventional canopy while in the elongated "just deployed" configuration and shows the air flow 1 at the canopy skirt creating an air turbulence eddy 2 on the exterior of the canopy.

Figure 2 illustrates the air flow pattern during activation of a parachute inflation assistance device on the canopy in accordance with this invention.

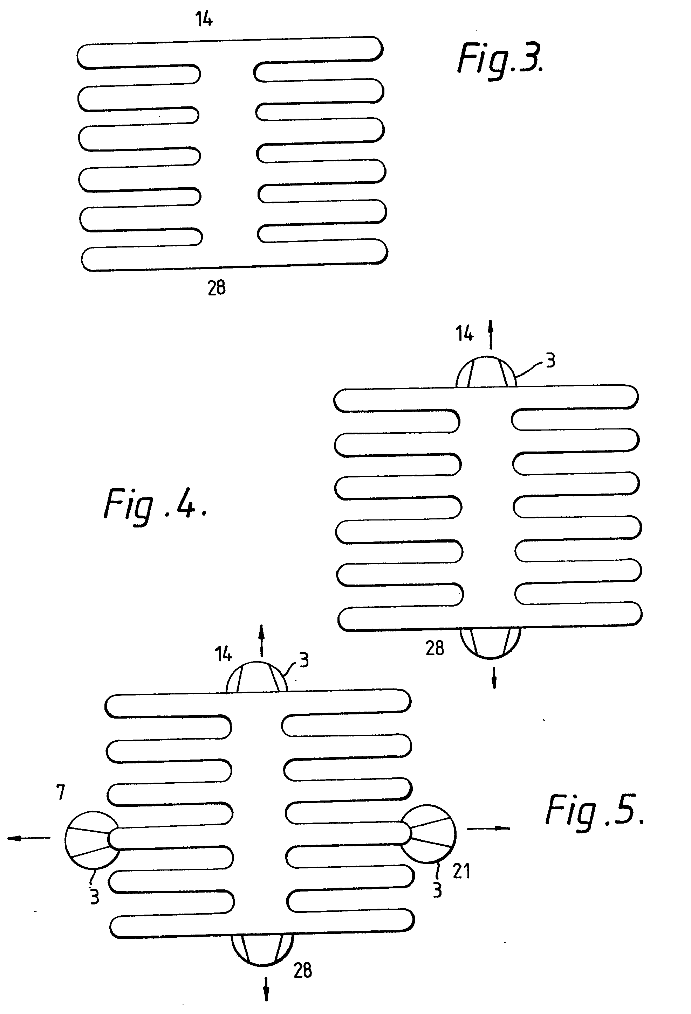

Figure 3 is exaggerated, but reveals the interior of a conventional parachute, at the skirt, after packing or in the very early post-deployment state. The numbers 14 and 28 are gore numbers assigned at time of original canopy manufacture.

Figure 4 illustrates the inflation assistance device in the form of an additional gore 3 on a canopy in accordance with this invention, beginning to open as line stretch occurs, the arrows indicating the direction of pull away from the centre of the folded canopy skirt.

Figure 5 shows further inflation assistance additional gores 3 on gores numbers 7 and 21 pulling in opposed directions along a line of action which is perpendicular to that of the devices 3 on gores 1 and 28, as indicated by the arrows.

Figures 3, 4 and 5 together explain the action of pulling open the skirt by means of the exterior air inflation of the inflation assistance additional gores 3.

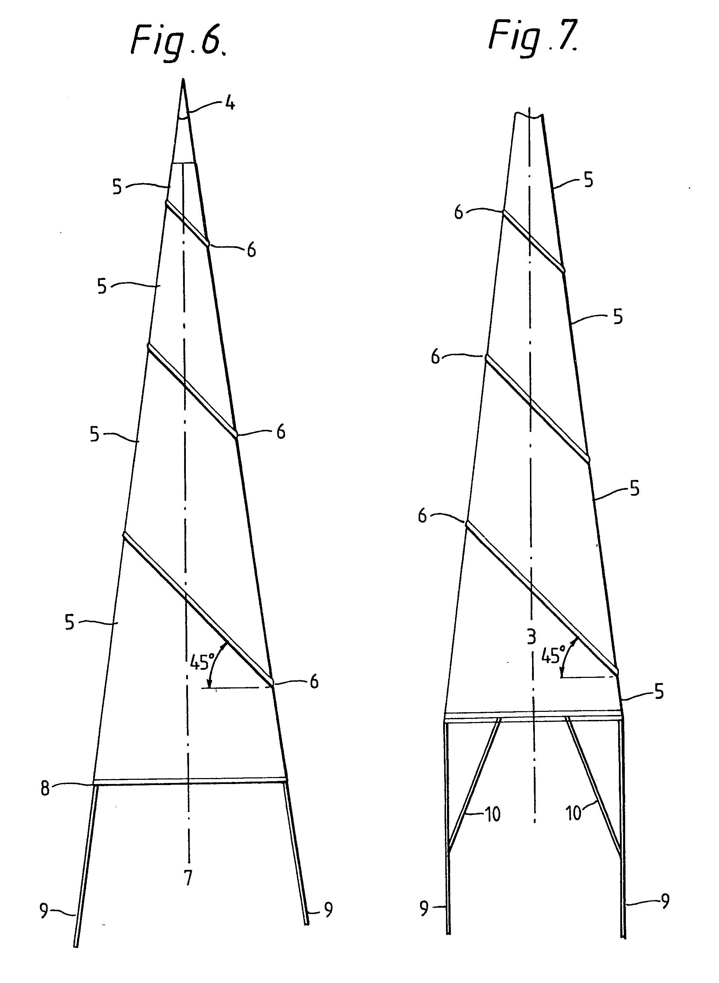

Figure 6 is a side elevational view of a conventional gore 5 showing the apex opening at 4.

Figure 7 is a side elevational view of the parachute inflation assistance additional gore 3 used to cover the gore 5 shown in Figure 6.

As shown in Figures 6 and 7, the parachute inflation assistance gore 3 is formed of nylon fabric or other porous material and constitutes an additional gore covering a main parachute canopy gore. The additional gore 3 is designed for actuation by air turbulence 2 on the exterior surface of the canopy. This gore 3 extends from the apex hem 4 of the particular covered canopy gore 7 downwards to a point approximately 20 cm above the equator or skirt 8 of the canopy.

The gore 3 forming the inflation assistance device is constructed of 1.1 oz. ripstop nylon or other low porosity material, and comprises four panel sections 5 cut on a 45 degree bias. These sections 5 are joined with diagonal seams 6 formed with nylon thread, size E, using a 301 stitch, with 28 to 43 stitches per 10 cm length of seam on two parallel rows. The inflation assistance additional gore 3 is sized according to the gore 7 it will cover on a given canopy. This width will be calculated at the apex hem 4 at a ratio of 2:1 to the width of the gore 7 being covered and will flare along the radial seams of sections 5 to a point 20 cm above the canopy skirt 8 where the ratio of the width of the assistance gore 3 to that of the canopy gore 7 is 1.22:1.

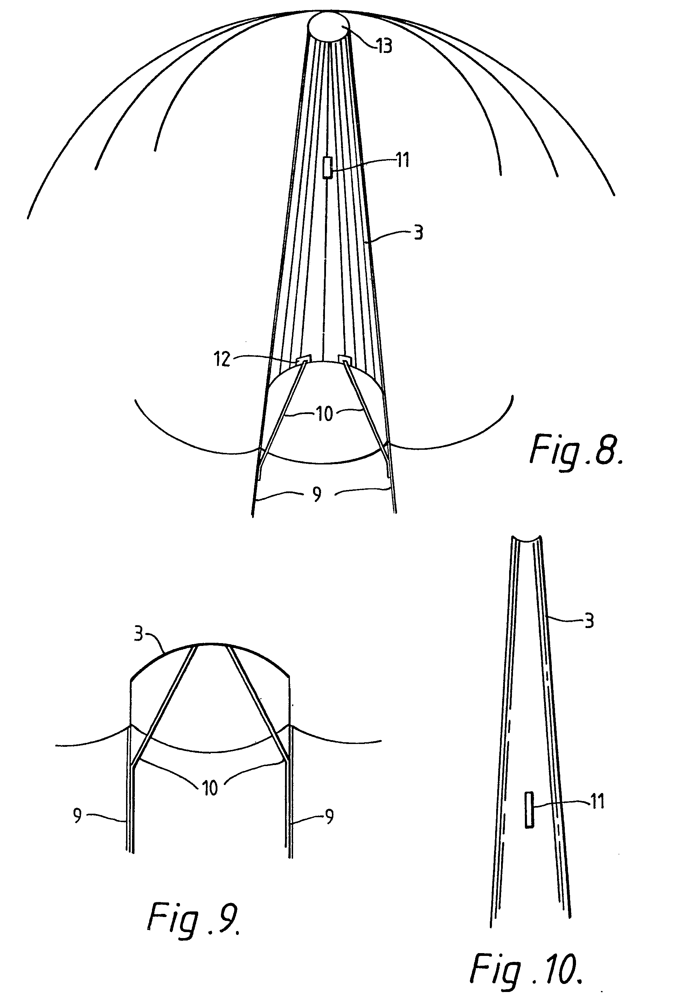

When constructing my assistance device for attachment to a previously manufactured parachute canopy it is advisable to allow a 12.5 cm excess of material along the radial seams, so that an English Fell seam of 6.5 mm will be employed. The radial seams are then joined using a nylon thread, size E, with a 301 stitch, pitched at 28 to 43 stitches per 10 cm length of seam in double rows on both sides of the suspension line channels. The additional gore 3 forming the inflation assistance device 3 is closed at the apex end 13 (Figure 8) in the same manner. The attachment of retention lines 10 is described below.

In the manufacture of new canopies the normal canopy gore 7 and the inflation assistance additional gore 3 will be joined at the radial seams with a French Fell seam in the same manner as above.

The skirt of the inflation assistance device is reinforced with one-inch (2.5 cm) wide nylon tape, folded longitudinally along its median line, and utilising nylon thread and a 301 stitch, stitched in four rows with 28 to 43 stitches per 10 cm length of seam.

The retention lines 10 of the inflation assistance device 3 are taken from suspension line stock rated at 250 Kg. tensile strength. Attachment of this retention line 10 at the skirt is accomplished 10 cm to the left and to the right of the 90° centre or longitudinal centre of the inflation assistance device 3 as shown in Figure 9 utilising nylon tape 0.5 inch (1.25 cm) wide×2.5 inches (6.35 cm) long to form a V tab. The retention line is laid on the skirt, covered with the tape, and then sewn with nylon thread, size E, using 308 stitch with six rows and 28 to 43 stitches per 10 cm length of seam.

Figure 8, illustrates one installed assistance additional gore 3 on an inflated canopy. The additional gore 3 begins at the apex end 13 where it is closed. Also, Figure 8 shows the location of the vent slot 11, and the junctions of attachment 11 of retention lines 10 to the inflation assistance gore 3 and to the suspension lines 9.

Figure 9 shows in greater detail the air flow access opening of the inflation assistance gore 3 and the attachment of the retention lines 10 of the inflation assistance gore 3 to the canopy suspension lines 9.

Figure 10, illustrates the inflation assistance gore 3 and the placement of the anti-oscillation vent slot 11.

The length of the retention line 10 will be 76 cm on a conical or a flat circular canopy and 112 cm on a hemispherical canopy. The retention line 10 will be attached to the suspension line 9 by a finger trap 1.25 cm, utilising a 308 stitch, nylon thread, with 28 to 43 stitches per 10 cm length of seam. It will thus be seen that, by virtue of transfer of tension from the lower portion of the inflation assistance device 3 forming the mouth of the device, the retention lines 10 prevent the mouth of the inflation assistance device from blowing back at high deployment velocities or laying down on the gores at low deployment velocities. Thus this lower portion is in the form of a constant arc, as shown in Figures 8 and 9. This also prevents the air turbulence eddy 2 from jumping over the lower end of the device 3 to locate itself above the air inlet mouth of the device.

An anti-oscillation vent slot 11, shown in Figure 10 is provided for release of air captured in the inflation assistance device. This air escape vent is a slit 6.5 mm wide, 12.7 cm long and is located astride the longitudinal centre line of the external gore, beginning 96 cm down from the apex hem. It is reinforced with 1.25 cm wide nylon tape, longitudinally folded along its centre line and attached with a 301 stitch, nylon thread, size E, with double rows of 28 to 43 stitches per 10 cm length of seam.

From the foregoing it will be seen that there is provided an inflation assistance device for parachutes which may be used for the transport of humans or of other loads from an aircraft, balloon or the like to the ground.

The conventional, flat circular canopy and the hemispherical or conical canopy, some with extended skirts, open slowly as air enters the air channel and travels to the apex of the parachute, whereby the volume increasingly spreads the canopy open downward to the juncture of the skirt and suspension lines. This is a time-consuming process and will not occur while the canopy is transverse to the relative air flow. With the improved inflation assistance device proposed in accordance with the present invention the inflation rate is significantly increased, regardless of the orientation of the canopy axis, by capturing the air turbulence existing on the exterior of the canopy above the skirt, thereby providing a life-saving capability at 60 metres regardless of the orientation of the canopy axis. Also, the low altitude rate of descent of the load is significantly reduced by in excess of 45 percent since the external gores entrap additional air about the canopy. At the same time the canopies are strengthened thereby significantly eliminating flattening effect during rebound. Furthermore, oscillation is reduced to $\pm 2$ degrees on flat, circular and hemispherical canopies where maximum oscillations of $\pm 30$ degrees are specified as inherent design limitations.

A still further advantage is that the inflation assistance device provides for multidirectional opening of the skirt of the canopy immediately, thereby separating the suspension lines and the fabric and in so doing significantly reduces the opportunity for canopy malfunction through line fabric entanglements and inversion of the skirt area fabric upward into the interior of the canopy.

## Claims

1. A parachute having a circular canopy of gore construction comprising:— a plurality of canopy gores (7) adjacent ones of which are joined by radial seams extending from the skirt of the canopy to the apex; external additional gores (3) of porous material covering canopy gores (7) with that end of each said external additional gore (3) which is nearer to the skirt terminating at a location spaced from the skirt (8) of said circular canopy, the radial edges of each said external additional gore (3) being joined to said circular canopy along the adjacent radial seams at the sides of the respective canopy gore (7) which it covers, and the width of said external additional gore (3) being greater than the covered part of said respective canopy gore (7) to define therebetween a compartment extending generally radially of the canopy with the end (13) of said compartment nearer the apex of the canopy closed and the other end of said compartment open; characterised in that the number of said external additional gores (3) is less than that of the said canopy gores (7).

2. A parachute according to claim 1, characterised in that said end of each said external additional gore (3) nearer the canopy skirt (8) terminates at a location of substantially 40 cm above the skirt (8) of said circular canopy.

3. A parachute according to claim 1 or 2, characterised by further including an anti-oscillation vent slot (11) provided in each said external additional gore (3) substantially 96 cm below the apex of said circular canopy.

4. A parachute according to claim 3, characterised in that each said vent slot (11) extends approximately 12 cm along the longitudinal centre line of said external additional gore (3) and is approximately 6.5 mm in width.

5. A parachute according to any one of the preceding claims, characterised in that at the apex hem the width of each said external additional gore (3) is calculated at a ratio of 2:1 to the width of said respective canopy gore (7) and said external additional gore flares downwardly along the radial seams of the said respective canopy gore (7) so that adjacent the lower end of said external additional gore the said ratio is 1.22:1 to the width of the said respective canopy gore.

6. A parachute according to any one of the preceding claims, characterised by including retention lines (10) attached to the portion of each said external additional gore which is nearer to said canopy skirt at spaced apart locations on opposite sides of the longitudinal centre line of said external additional gore and extending to and being attached to the adjacent suspension lines (9) for the said respective canopy gore (7).

7. A parachute according to claim 6, characterised in that the canopy is a conical or a flat circular canopy and said retention lines (10) are substantially 76 cm in length.

8. A parachute according to claim 6, in which the canopy is hemispherical and characterised in that said retention lines (10) are substantially 112 cm in length.

9. A parachute according to claim 6, 7 or 8, characterised in that said retention lines (10) are attached to the lower portion of each said external additional gore (3) at locations spaced approximately 10 cm to either side of the longitudinal centre of said external additional gore.

## Patentansprüche

1. Fallschirm mit einer Rundkappe in Bahnausführung mit einer Mehrzahl von Kappenbahnen (7), von denen nebeneinanderliegende über sich vom Rand der Kappe zum Scheitel erstreckende Radialnähte verbunden sind, und mit die Kappenbahnen (7) überdeckenden äußeren Zusatzbahnen (3) aus porösem Material, wobei das Ende jeder äußeren Zusatzbahn (3), das näher am Rand liegt, in einem Abstand vom Rand (8) der Rundkappe endet, die Radialränder jeder äußeren Zusatzbahn (3) mit der Rundkappe entlang der benachbarten Radialnähte an den Seiten der entsprechenden Kappenbahn (7), die sie überdeckt, verbunden sind und die Breite der äußeren Zusatzbahn (3) größer ist als der überdeckte Teil der entsprechenden Kappenbahn (7), um dazwischen eine Kammer abzugrenzen, die sich im wesentlichen in Radialrichtung der Kappe erstreckt, wobei das dem Scheitel näherliegende Ende (13) der Kammer geschlossen und das andere Ende der Kammer offen ist, dadurch gekennzeichnet, daß die Zahl der äußeren Zusatzbahnen (3) kleiner ist als die der Kappenbahnen (7).

2. Fallschirm nach Anspruch 1, dadurch gekennzeichnet, daß das dem Kappenrand (8) näherliegende Ende der äußeren Zusatzbahn (3) an einer Stelle etwa 40 cm oberhalb des Randes (8) der Rundkappe endet.

3. Fallschirm nach Anspruch 1 oder 2, ferner gekennzeichnet durch einen in jeder äußeren Zusatzbahn (3) etwa 96 cm unterhalb des Scheitels der Rundkappe vorgesehenen Anti-Oszillations-Luftabzugsschlitz (11).

4. Fallschirm nach Anspruch 3, dadurch gekennzeichnet, daß jeder Luftabzugsschlitz (11) sich etwa 12 cm entlang der Längsmittellinie der äußeren Zusatzbahn (3) erstreckt und etwa 6,5 mm breit ist.

5. Fallschirm nach einem der vorhergehenden Ansprüche, dadurch gekennzeichnet, daß am Scheitelrand die Breite jeder äußeren Zusatzbahn (3) in einem Verhältnis von 2:1 zur Breite der entsprechenden Kappenbahn (7) berechnet ist und daß sich die äußere Zusatzbahn nach unten entlang der Radialnähte der entsprechenden Kappenbahn (7) so erweitert, daß am unteren Ende der äußeren Zusatzbahn das Verhältnis 1,22:1 zur Breite der entsprechenden Kappenbahn beträgt.

6. Fallschirm nach einem der vorhergehenden Ansprüche, gekennzeichnet durch Halteleinen (10), die an dem Teil jeder äußeren Zusatzbahn, das näher zum Kappenrand liegt, an einen Abstand zueinander aufweisenden Stellen auf gegenüberliegenden Seiten der Längsmittellinie der äußeren Zusatzbahn befestigt sind und sich zu den benachbarten Aufhängungsleinen (9) für die entsprechende Kappenbahn (7) erstrecken und an dieser befestigt sind.

7. Fallschirm nach Anspruch 6, dadurch gekennzeichnet, daß die Kappe eine kegelförmige oder ebene Rundkappe ist und daß die Halteleinen (10) etwa 76 cm lang sind.

8. Fallschirm nach Anspruch 6 mit einer halbkugelförmigen Kappe, dadurch gekennzeichnet, daß die Halteleinen (10) etwa 112 cm lang sind.

9. Fallschirm nach Anspruch 6, 7 oder 8, dadurch gekennzeichnet, daß die Halteleinen (10) am unteren Bereich jeder äußeren Zusatzbahn (3) an Stellen in einem Abstand von etwa 10 cm auf jeder Seite zur Längsmittellinie der äußeren Zusatzbahn befestigt sind.

**Revendications**

1. Parachute ayant une voilure circulaire d'une construction à fuseaux comprenant: un certain nombre de fuseaux (7) de la voilure dont ceux qui sont adjacents sont joints par des coutures radiales qui s'étendent de la jupe de la voilure jusqu'au sommet; des fuseaux supplémentaires extérieurs (3) en matière poreuse couvrant les fuseaux de la voilure (7), avec l'extrémité de chaque fuseau supplémentaire extérieur (3) qui est la plus proche de la jupe se terminant en un emplacement qui est espacé de la jupe (8) de ladite voilure circulaire, les bords radiaux de chaque fuseau supplémentaire externe (3) étant joints à ladite voilure circulaire le long de coutures radiales adjacentes sur les côtés du fuseau respectif (7) de la voilure qu'il couvre, et la largeur dudit fuseau externe supplémentaire (3) étant supérieure à la partie couverte dudit fuseau respectif (7) de la voilure pour définir un compartiment qui s'étend généralement radialement avec l'extrémité (13) dudit compartiment la plus proche du sommet de la voilure fermée et l'autre extrémité dudit compartiment ouverte; caractérisé par le fait que le nombre de fuseaux supplémentaires externes (3) est inférieur à celui des fuseaux de la voilure (7).

2. Parachute selon la revendication 1, caractérisé par le fait que ladite extrémité de chaque fuseau externe supplémentaire (3) la plus proche de la jupe (8) de la voilure se termine en un emplacement qui est sensiblement à 40 cm au-dessus de la jupe (8) de ladite voilure circulaire.

3. Parachute selon la revendication 1 ou 2, caractérisé par le fait qu'il comprend de plus une fente d'évent anti-oscillation (11) qui est prévue dans chaque fuseau supplémentaire externe (3) sensiblement à 96 cm en-dessous du sommet de ladite voilure circulaire.

4. Parachute selon la revendication 3, caractérisé par le fait que chaque fente d'évent (11) s'étend à peu près sur 12 cm le long de l'axe longitudinal dudit fuseau supplémentaire externe (3) et a environ 6,5 mm de large.

5. Parachute selon l'une des revendications précédentes, caractérisé par le fait qu'à la bordure du sommet, la largeur de chaque fuseau externe supplémentaire (3) est calculée à un rapport de 2:1 avec la largeur dudit fuseau respectif de la voilure (7) et ledit fuseau supplémentaire externe s'évase vers le bas le long des coutures radiales dudit fuseau respectif de la voilure (7), de telle sorte qu'à proximité de l'extrémité inférieure dudit fuseau externe supplémentaire, ledit rapport soit de 1,22:1 avec la largeur dudit fuseau respectif de la voilure.

6. Parachute selon l'une des revendications précédentes, caractérisé par le fait qu'il comprend des lignes de retenue (10) qui sont attachées à la partie de chaque fuseau externe supplémentaire qui est la plus proche de la jupe de la voilure en des emplacements espacés sur des côtés opposés de l'axe longitudinal dudit fuseau externe supplémentaire, et s'étendant jusqu'à des lignes de suspension adjacentes (9) auxquelles elles sont fixées pour ledit fuseau respectif de la voilure.

7. Parachute selon la revendication 6, caractérisé par le fait que la voilure est une voilure circulaire plate ou conique et les lignes de retenue (10) ont sensiblement 76 cm de long.

8. Parachute selon la revendication 6, dans lequel la voilure est hémisphérique, caractérisé par le fait que les lignes de retenue (10) ont sensiblement 112 cm de long.

9. Parachute selon la revendication 6, 7 ou 8, caractérisé par le fait que les lignes de retenue (10) sont attachées à la partie inférieure de chaque fuseau supplémentaire externe (3) en des emplacements qui sont à peu près espacés de 10 cm de chaque côté du centre longitudinal dudit fuseau externe supplémentaire.

**0015778**

Fig.1.

Fig.2.

0 015 778

*Fig.3.*

14

28

*Fig .4.*

14
3

28

7
14
3

*Fig .5.*

3
21
3

28

2

0015778

# Fig.6.

# Fig.7.

45°

45°

3

0015778

Fig .8.

Fig .9.

Fig .10.

4